# EUROPÄISCHE PATENTANMELDUNG

(11) **EP 0 596 334 A1**
(43) Veröffentlichungstag der Anmeldung: **11.05.1994**
(21) Anmeldenummer: 93117020.3
(22) Anmeldetag: 21.10.1993
(51) Int. Cl.: B01D 35/12

(54) **Verfahren und Einrichtung zur Versorgung einer Maschinenanlage mit im Kreislauf über ein Filtersystem umgewälzter Flüssigkeit, wie Kühlschmiermittel, Suspension oder Öl u.dgl.**

(30) Priorität: 03.11.1992 DE 4237028
(71) Anmelder: Boll & Kirch Filterbau GmbH, D-50170 Kerpen (DE)
(72) Erfinder: Ungewitter, Falk, D-40668 Meerbusch (DE); Lennartz, Hans Rüdiger, Dipl.-Ing., D-50259 Pulheim (DE)
(74) Vertreter: Vollbach, Hans, Dipl.-Ing.

(57) **Zusammenfassung**

Die Erfindung betrifft ein Verfahren und eine Einrichtung zur kontinuierlichen Versorgung einer Maschinenanlage mit im Kreislauf über ein Filtersystem umgewälzter Flüssigkeit, wie Kühlschmiermittel, Suspension oder Öl u.dgl., wobei die mit Spänematerial versetzte Schmutzflüssigkeit in einem Schmutztank (9) gepuffert und mit Hilfe eines Filterpumpenaggregates (14) über das Filtersystem (1) in den Arbeitskreislauf zurückgeführt wird. Nach der Erfindung weist das Filtersystem mindestens zwei Druckfilter (2) auf, deren Filterelemente durch Umwälzen der im Schmutztank befindlichen Schmutzflüssigkeit über eine Umwälzleitung (23) mit dem Spänematerial vorbelegt werden, bevor die Druckfilter auf die zu der Maschinenanlage führende Filtratleitung (6) umgeschaltet werden. Das Filterpumpenaggregat (14) ist im Pumpendruck so ausgelegt, daß am Ausgang der Druckfilter (2) noch ein ausreichender Förderdruck für das Filtrat zur Verfügung steht. Im Bedarfsfall kann in der Filtratleitung eine Druckerhöhungspumpe angeordnet werden.

## Beschreibung

Die Erfindung betrifft ein Verfahren zur Versorgung einer Maschinenanlage mit im Kreislauf über ein Filtersystem umgewälzter Flüssigkeit, wie Kühlschmiermittel, Suspension oder Öl u.dgl., wobei die von der Maschinenanlage zurückgeführte, mit Spänematerial, wie vor allem Schleifspänen u.dgl., versetzte Schmutzflüssigkeit einem Schmutztank zur Pufferung zugeführt wird, aus dem sie mittels eines Filterpumpenaggregates abgezogen, durch das Filtersystem hindurchgeführt und als Filtrat wieder in den Kreislauf zurückgeführt wird. Ferner ist die Erfindung auf eine zur Verfahrensdurchführung verwendbare Einrichtung gerichtet.

Bei Maschinenanlagen, insbesondere bei Werkzeugmaschinenanlagen mit spanender Bearbeitung von metallenen Werkstücken, bei Schleif-, Hon- und Bohrmaschinen, aber auch bei Walzanlagen u.dgl. werden die hier verwendeten Kühlschmiermittel, Suspensionen und Öle im Kreislauf zwischen der Maschinenanlage und einem Filtersystem geführt, wobei die von der Maschinenanlage zurückgeführte Schmutzflüssigkeit in einem Schmutztank gepuffert wird, aus der sie mittels eines Filterpumpensystems abgezogen wird. Die gefilterte Reinflüssigkeit (Filtrat) wird über eine Filtratleitung einem Reintank zugeführt und in diesem gepuffert. Dem Reintank zugeordnet ist ein Maschinenpumpensystem, welches die Reinflüssigkeit aus dem Reintank abzieht und der Maschinenanlage mit dem erforderlichen Pumpendruck zuführt.

Für die Filtration der mit Spänematerial, z.B. mit Schleifspänen, verschmutzten Flüssigkeit haben sich Kerzenfilter bewährt, die im Filtergehäuse mehrere, zumeist aus Spaltfilterelementen bestehende Filterkerzen aufweisen und die mit Trockenaustrag des Filterkuchens arbeiten. Zu diesem Zweck kann ein Druckgas (Druckluft) in das Filtergehäuse eingeführt werden, das das Filtergehäuse leer drückt und dabei die Kuchentrocknung bewirkt. Für den Austrag des auf eine Restfeuchte getrockneten Filterkuchens werden Klopfvorrichtungen u.dgl. verwendet, die Schlag- oder Rüttelimpulse auf die Filterkerzen ausüben, so daß sich der getrocknete Filterkuchen von diesen löst und am Boden aus dem Filtergehäuse ausgetragen wird (vgl. z.B. DE-PS 28 28 976). Die bekannten Kerzenfilter arbeiten als Anschwemmfilter, d.h. sie werden mit einem Filterhilfsmittel, z.B. Kieselgur, belegt, das den Aufbau des Filterkuchens und damit die Filterfeinheit bestimmt.

Ein Nachteil der bekannten Systeme besteht unter anderem darin, daß zur Pufferung der im Filtersystem gereinigten Flüssigkeit ein gesonderter Reintank sowie zusätzlich zu dem Filterpumpenaggregat ein Maschinenpumpenaggregat vorgesehen werden muß, das die Reinflüssigkeit aus dem Reintank abzieht und der Maschinenanlage zuführt. Hierdurch ergibt sich ein erheblicher Bauaufwand für die Gesamtanlage. Die Verwendung von Anschwemmfiltern, die mit einem Filterhilfsmittel arbeiten, führt zu einem zusätzlichen Bauaufwand und auch zu Entsorgungsproblemen.

Aufgabe der Erfindung ist es, ein Verfahren zur Versorgung einer aus einer Einzelmaschine oder einer Maschinengruppe bestehenden Maschinenanlage mit Kühlschmiermittel, Suspension, Öl od. dgl. zu schaffen, mit dem eine kontinuierliche Versorgung bei erheblich vermindertem Apparate- und Betriebsaufwand erreichbar ist. Ferner bezweckt die Erfindung eine in dieser Hinsicht vorteilhafte Einrichtung.

Die vorgenannte Aufgabe wird mit dem erfindungsgemäßen Verfahren dadurch gelöst, daß als Filtersystem ein Druckfiltersystem mit mehreren Druckfiltern verwendet wird, deren Filterelemente durch Umwälzen der im Schmutztank befindlichen Schmutzflüssigkeit über eine Umwälzleitung mit dem Spänematerial vorbelegt werden, bevor sie auf die zu der Maschinenanlage führende Filtratleitung umgeschaltet werden, wobei das Filterpumpenaggregat zugleich als Maschinenpumpenaggregat verwendet wird.

Bei dieser Verfahrensweise wird auf die Verwendung des üblicherweise vorhandenen Reintanks sowie des ihm zugeordneten Maschinenpumpenaggregates verzichtet. Das Verfahren arbeitet stattdessen im Kreislaufbetrieb Schmutztank, Filtersystem, Schmutztank. Dabei ist das Filterpumpenaggregat mit dem Druckfiltersystem im Betriebsdruck so ausgelegt, daß es die dem Schmutztank entnommene Schmutzflüssigkeit durch das Druckfiltersystem hindurchführt und zugleich über die Filtratleitung zu der Maschinenanlage pumpt. Werden an der Maschinenanlage höhere Pumpendrükke, z.B. solche über 8 bar, benötigt, so läßt sich dies bedarfsweise mit Hilfe einer zusätzlichen Druckerhöhungspumpe erreichen. Auf die Verwendung von Filterhilfsmitteln der üblichen Art wird bei dem erfindungsgemäßen Verfahren verzichtet, so daß auch insoweit Kosteneinsparungen gegeben sind und Entsorgungsprobleme entfallen.

Es hat sich gezeigt, daß das üblicherweise anfallende Spänematerial, besonders ausgeprägt ein aus Schleifspänen bestehendes Spänematerial, die Eigenschaft hat, einen zusammenhängenden, die Filterwirkung bzw. die Filterfeinheit verbessernden Filterkuchen aufzubauen, so daß es zur Vorbelegung der Filterelemente gut verwendbar ist. Beispielsweise kann bei Verwendung von Spaltfilterelementen mit einer Spaltweite von etwa 75um und bei den gegebenen Betriebsdrücken ein Filterkuchen an den Spaltfilterelementen aufgebaut werden, der den im allgemeinen geforderten Restschmutzgehalt von 30 mg/Itr. hinter dem Filter ermöglicht. Die bei der Schaltung der Druckfilter auf Filterbetrieb vorliegende Anfangsverschmutzung auf der Reinseite des Filters bleibt aufgrund der Vorbelegung des Filters mit dem Spänematerial äußerst gering. Die Vorbelegung der Filterelemente mit dem Spänematerial gewährleistet somit durchgehend einen sehr guten Abscheidegrad über die gesamte Filtrationsphase hinweg.

Nach dem erfindungsgemäßen Verfahren wird die dem Schmutztank entnommene Schmutzflüssigkeit über zwei oder auch mehr Druckfilter des Druckfiltersystems abgereinigt, wobei im Betrieb der Maschinenanlage mindestens einer der Druckfilter ständig Filtrat bzw. Reinflüssigkeit der Maschinenanlage zuführt, wenn sich mindestens ein weiterer Druckfilter in der Regenerationsphase (Filterkuchenaustrag und Vorbelegung mit Spänematerial) befindet. Damit ist eine kontinuierliche Versorgung der Maschinenanlage mit Filtrat gewährleistet. Das Filtrat kann bedarfsweise über einen in der Filtratleitung angeordneten Kühler gekühlt werden. Im übrigen werden für das Druckfiltersystem zweckmäßig Kerzendruckfilter mit Filterkuchentrocknung durch Druckgaseinleitung verwendet, wobei aber auf die Grundanschwemmung eines Filterhilfsmittels zugunsten der Vorbeschichtung der Filterelemente mit dem Spänematerial verzichtet wird.

Die zur Durchführung des erfindungsgemäßen Verfahren verwendbare Einrichtung weist als Filtersystem mindestens zwei Druckfilter auf, die mit ihrem Filtereinlaß über das Filterpumpenaggregat an den gemeinsamen Schmutztank sowie mit ihrem Filterauslaß einerseits über eine absperrbare Umwälzleitung an den Schmutztank und andererseits an eine gemeinsame, zu der Maschinenanlage führende, ebenfalls absperrbare Filtratleitung angeschlossen sind. Wie erwähnt, werden für die Druckfilter des Filtersystems vorzugsweise Kerzendruckfilter mit Filterkuchentrocknung durch Einleiten eines Druckgases (Druckluft) verwendet. Vorzugsweise ist die Anordnung so getroffen, daß die mit ihren Filtereinlässen an das gemeinsame Filterpumpenaggregat angeschlossenen Druckfilter über Absperrventile, die sich in ihren Pumpenanschlußleitungen befinden, einzeln oder auch gemeinsam absperrbar sind. Entsprechende Absperrventile werden ausgangsseitig der Druckfilter in der Filtratleitung und der zum Schmutztank zurückführenden Umwälzleitung vorgesehen. Damit ist es möglich, eine kontinuierliche Versorgung der Maschinenanlage mit Filtrat zu erreichen, wenn mindestens ein Druckfilter des Filtersystems sich in der Regenerationsphase befindet.

Es empfiehlt sich, die Druckfilter eingangsseitig über Absperrventile an eine gemeinsame, zu dem Schmutztank führende Entleerungsleitung anzuschließen, über die die Druckfilter in der Regenerationsphase bei Druckgaseinleitung zum Schmutztank hin leergedrückt werden. Auch wird zweckmäßig eine Absteuerleitung vorgesehen, über die das Filtrat in den Schmutztank zurückgeführt werden kann, wenn vorübergehend, z.B. Maschinenstillstand, keine Maschinenabnahme erfolgt.

Das Filterpumpenaggregat weist zweckmäßig in Parallelschaltung mehrere Pumpen auf, die saugseitig jeweils über ein Absperrventil an die zum Schmutztank führende gemeinsame Saugleitung und druckseitig über Absperrventile an die zu den verschiedenen Druckfiltern führenden Pumpendruckleitungen des Filterpumpenaggregates angeschlossen sind, so daß für jeden Druckfilter eine eigene Pumpe zur Verfügung steht und möglichst auch eine Ersatzpumpe vorhanden ist, die bei Ausfall einer Pumpe die Versorgung der Maschinenanlage mit Filtrat sicherstellt.

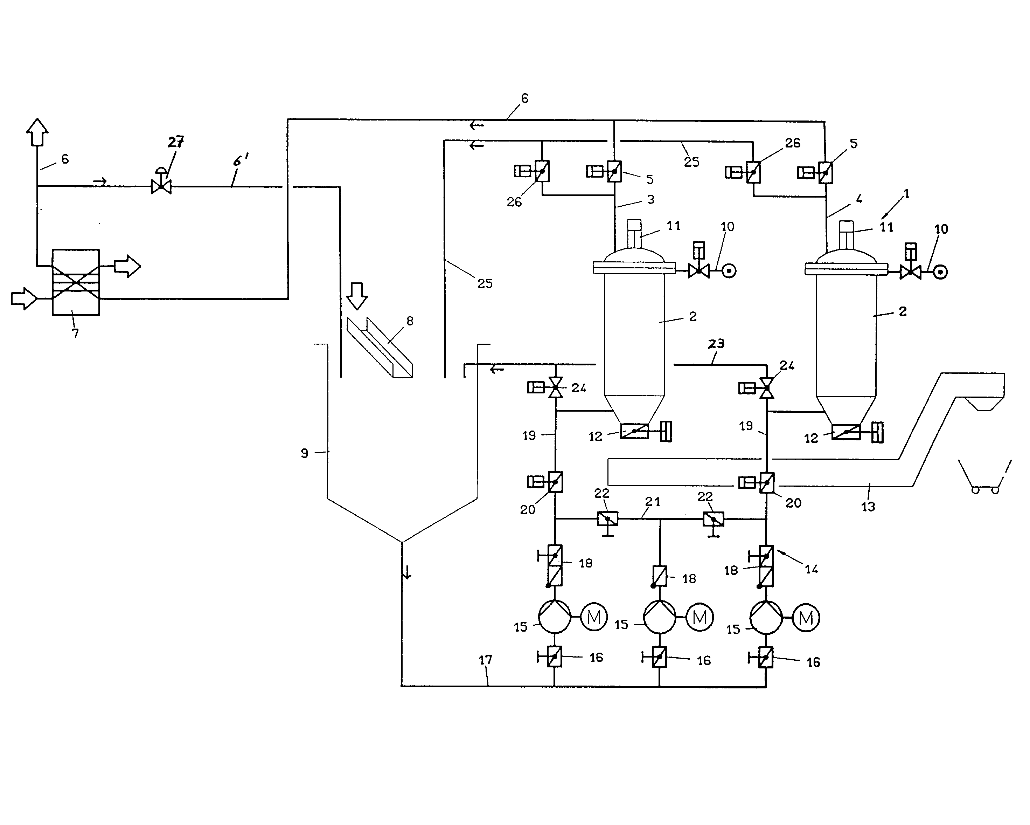

Die Erfindung wird nachfolgend im Zusammenhang mit dem in der Zeichnung in einem schematisierten Schaltbild dargestellten Ausführungsbeispiel einer erfindungsgemäßen Einrichtung näher erläutert.

Die dargestellte Einrichtung weist ein Filtersystem 1 mit zwei parallel zueinander angeordneten, gleich ausgebildeten Druckfiltern 2 auf, die mit ihren im Kopfbereich des Filtergehäuses angeordneten Filterauslässen über Leitungen 3 und 4, in denen sich jeweils ein Absperrventil 5 befindet, an eine gemeinsame Filtratleitung 6 angeschlossen sind, die im gezeigten Ausführungsbeispiel über einen Kühler 7 zu der (nicht dargestellten) Maschinenanlage führt, die aus einer Einzelmaschine oder auch aus einer Maschinengruppe bestehen kann, die mit einem Kühlschmiermittel üblicher Art, einer Suspension oder auch Öl versorgt wird. Bei der Maschinenanlage kann es sich um Werkzeugmaschinen, um Schleif- oder Honmaschinen, Bohrmaschinen oder auch um Walzmaschinen u.dgl. handeln. Die die Versorgungsleitung für die Maschinenanlage bildende Filtratleitung 6 führt ohne Einschaltung eines Reintanks zu der Maschinenanlage. Die mit Spänematerial od.dgl., z.B. mit Schleifspänen, verschmutzte Flüssigkeit wird von der Maschinenanlage über die in der Zeichnung lediglich bei 8 angedeutete Rücklaufleitung in einen Schmutztank 9 zurückgeführt und in diesem gepuffert.

Die Druckfilter 2 des Filtersystems bestehen vorzugsweise aus Kerzendruckfiltern, die jeweils im Inneren des Filtergehäuses mehrere Filterkerzen, z.B. in Gestalt von Spaltfilterelementen oder auch von mit Filtergewebe belegten Filterkerzen aufweisen und die in bekannter Weise mit Trockenaustrag des Filterkuchens arbeiten. Ein solcher Kerzenfilter ist z.B. aus der DE-PS 28 28 976 bekannt, auf deren Offenbarungsinhalt hier Bezug genommen werden kann. Für die Filterkuchentrocknung wird Druckgas (Druckluft) über eine Gasanschlußleitung 10 in das Filtergehäuse eingeführt. Beim Leerdrücken des Filtergehäuses wird daher der Filterkuchen an den Filterkerzen auf eine bestimmte Restfeuchte getrocknet. Das Lösen des getrockneten Filterkuchens von den Filterkerzen erfolgt in bekannter Weise mittels Klopf- oder Rütteleinrichtungen 11 od.dgl., mit deren Hilfe Schlagimpulse auf den Träger der Filterkerzen ausgeübt werden können. Der von den Filterkerzen gelöste Filterkuchen kann am Boden der Filtergehäuse über eine mittels einer Absperrklappe 12 verschließbaren Austragsöffnung ausgetragen werden, z.B. auf einen für die beiden Druckfilter gemeinsamen Austragsförderer 13 oder auch in einen Container od.dgl.

Den beiden Druckfiltern 2 ist ein gemeinsames Filterpumpenaggregat 14 zugeordnet. Dieses weist im gezeigten Ausführungsbeispiel drei parallel angeordnete Pumpen 15 auf, die saugseitig jeweils über ein Absperrventil 16 an die zum Schmutztank 9 führende gemeinsame Saugleitung 17 und druckseitig über Absperrventile 18 an die zu den Druckfiltern 2 bzw. deren Filtereinlässen führenden Pumpendruckleitungen angeschlossen sind, wobei in diesen Pumpendruckleitungen 19 weitere Absperrventile 20 angeordnet sind. Die beiden Pumpendruckleitungen 19 sind über eine Leitung 21 verbunden, in die die mittlere Pumpe 15 fördert und in der zu beiden Seiten der Anschlußstelle der Druckleitung dieser mittleren Pumpe 15 jeweils ein Absperrventil 22 angeordnet ist. Die mittlere Pumpe 15 bildet eine Ersatzpumpe, die bei Ausfall einer der beiden weiteren Pumpen 15 durch entsprechende Betätigung der Absperrventile 18, 22 zugeschaltet werden kann. Die Druckfilter und damit auch die Pumpen sind zweckmäßig auf einen Pumpendruck von maximal 10 bar ausgelegt.

Die zu den Druckfiltern 2 führenden Pumpendruckleitungen 19 sind hinter den Anschlüssen der Druckfilter an eine gemeinsame, zu dem Schmutztank 9 führende Entleerungsleitung 23 angeschlossen, wobei an den Anschlüssen jeweils ein Absperrventil 24 angeordnet ist. In der Regenerationsphase der Druckfilter 2 wird die in ihnen enthaltene Flüssigkeit bei Druckgasbeaufschlagung über die Entleerungsleitung 23 in den Schmutztank 9 zurückgedrückt, wobei das oder die Absperrventile 24 geöffnet und das oder die Absperrventile 20 geschlossen sind.

Erfolgt an der Maschinenanlage vorübergehend keine Filtratabnahme, so kann das von dem Filterpumpenaggregat 14 geförderte Filtrat hinter den Druckfiltern 2 über eine von der Filtratleitung 6 abzweigende Absteuerleitung 6' durch Öffnen eines Absperrventils 27 in den Schmutztank 9 zurückgeführt werden.

Die Druckfilter 2 sind auslaßseitig, d.h. vor den Absperrventilen 5 an eine gemeinsame Umwälzleitung 25 angeschlossen, die ebenfalls in den Schmutztank 9 führt, wobei an jedem Anschluß der Druckfilter zu der Umwälzleitung 25 ein Absperrventil 26 vorgesehen ist.

Im Filterbetrieb wird die mit dem Spänematerial versetzte Schmutzflüssigkeit von dem Filterpumpenaggregat 14 am Boden aus dem Schmutztank 9 abgezogen und den Druckfiltern 2 über die Pumpendruckleitungen 19 zugeführt. Dabei können nur die beiden äußeren Pumpen 15 des Filterpumpenaggregates 14 arbeiten, während die mittlere Pumpe 15 bei geschlossenen Ventilen 16, 18 und 22 abgeschaltet ist. Über die geöffneten Absperrventile 18 und 20 wird bei im Schließzustand befindlichen Absperrventilen 24 die Schmutzflüssigkeit mit dem Pumpendruck den Druckfiltern 2 zugeführt. Dabei wird das Spänematerial od.dgl. aus der Schmutzflüssigkeit ausgefiltert. Das Filtrat verläßt die Druckfilter 2 und gelangt über die mit ihren Filterauslässen verbundenen Anschlußleitungen 3 und 4 in die zu der Maschinenanlage führende Filtratleitung 6. Hierbei sind die Absperrventile 5 geöffnet und die Absperrventile 26 der Umwälzleitung 25 geschlossen. Die von der Maschinenanlage zurückgeführte, das Spänematerial enthaltende Schmutzflüssigkeit gelangt, wie erwähnt, in den Schmutztank 9, aus dem die Schmutzflüssigkeit dann mit Hilfe des Filterpumpenaggregates 14 wieder abgezogen wird. Damit ist ein kontinuierlicher Kreislaufbetrieb Schmutztank, Filtersystem, Maschinenanlage, Schmutztank möglich.

Der kontinuierliche Kreislaufbetrieb kann auch nur über einen der beiden Druckfilter 2 durchgeführt werden, wobei der andere Druckfilter 2 vom Kreislauf abgesperrt ist und sich z.B. in der Regenerationsphase befindet.

Bei der vorstehend beschriebenen Arbeitsweise wird so gearbeitet, daß vor der Schaltung des oder der Druckfilter 2 auf Filterbetrieb zunächst eine Vorbelegung der Filterelemente mit dem Spänematerial erfolgt, um an den Filterelementen bzw. den Filterkerzen einen dünnen Filterkuchen von z.B. 2 - 3 mm Dicke aufzubringen, bevor auf Filterbetrieb geschaltet wird. Diese Vorbelegung erfolgt dadurch, daß die von der oder den entsprechenden Pumpen 15 aus dem Schmutztank 9 abgezogene Schmutzflüssigkeit bei geöffneten Ventilen 16, 18, 20 und geschlossenen Absperrventilen 24 und 5 im Kreislauf über die Umwälzleitung 23 und den Schmutztank 9 umgewälzt wird. Nach Beendigung der Vorbeschichtung wird das Absperrventil 26 geschlossen und das Absperrventil 5 geöffnet, so daß nun im Kreislauf über die Filtratleitung 6, die Maschinenanlage, den Schmutztank 9 und den oder die Druckfilter gearbeitet werden kann.

Im allgemeinen wird in der Weise gearbeitet, daß jeweils dann, wenn sich der eine Druckfilter 2 in der Regenerationsphase befindet, bei der er vom Pumpenkreislauf und damit auch von der Filtratleitung 6 abgesperrt ist, der andere Druckfilter 2 den Filterbetrieb im Kreislauf über die Filtratleitung 6, die Maschinenanlage und den Schmutztank 9 aufrecht erhält. Während der Regenerationsphase wird an dem vom Arbeitskreislauf abgeschalteten Druckfilter 2 der Filterkuchen durch Druckgaseinleitung über die Zuführung 10 getrocknet, wobei der Druckfilter bei geschlossenem Absperrventil 20 und geöffnetem Absperrventil 24 über die Entleerungsleitung 23 zum Schmutztank 9 hin leergedrückt wird. Anschließend wird der auf eine Restfeuchte getrocknete Filterkuchen mit Hilfe der Klopfvorrichtung 11 von den Filterkerzen abgetrennt und bei geöffneter Absperrklappe 12 aus dem Filtergehäuse auf den Filterkuchenförderer 13 oder in einen Container od. dgl. ausgetragen. Anschließend erfolgt dann an diesem Druckfilter 2 die Vorbelegung seiner Filterkerzen mit dem Spänematerial durch Umwälzen der Schmutzflüssigkeit über den Schmutztank 9 und die Umwälzleitung 25 im Kreislaufbetrieb, wobei das Ventil 20 geöffnet und das Ventil 24 geschlossen ist. Nach der Vorbelegung der Filterkerzen kann dann dieser Druckfilter 2 durch Umschalten der Ventile 26 und 5 wieder in den Arbeitskreis der Filtratleitung 6 geschaltet werden. Bei der kleinsten Auslegung des Filtersystems mit nur zwei Druckfiltern wird zur kontinuierlichen Versorgung der Maschinenanlage so gearbeitet, daß in der Regenerationsphase des einen Druckfilters der andere Druckfilter die Maschinenversorgung mit Filtrat aufrechterhält. Die Regenerationsphase an den beiden Druckfiltern erfolgt also stets zeitversetzt.

Nach Vorstehendem wird bei dem System mit solchen Pumpendrücken des Filterpumpenaggregates 14 gearbeitet, daß am Ausgang der beiden Druckfilter 2 noch ein ausreichender Pumpendruck vorhanden ist, um das Filtrat über die Filtratleitung 6 der Maschinenanlage zuzuführen. Demgemäß sind die Druckfilter 2 auf einen entsprechend hohen Betriebsdruck ausgelegt, vorzugsweise auf einen maximalen Betriebsdruck von 10 bar. Sind im Einzelfall höhere Betriebsdrücke notwendig, so können nachgeschaltete Druckpumpen in der Filtratleitung 6 zur Druckerhöhung vorgesehen werden.

Im gezeigten Ausführungsbeispiel weist das Filtersystem zwei Druckfilter 2 auf. Im allgemeinen wird es sich empfehlen, mehr als zwei Druckfilter, z.B. drei oder auch vier Druckfilter der genannten Art vorzusehen, wodurch auch die Betriebssicherheit in der kontinuierlichen Versorgung der Maschinenanlage mit Reinflüssigkeit erhöht wird und eine bessere Anpassung der Filtratmenge an den Betriebsbedarf erreichbar ist.

## Patentansprüche

1. Verfahren zur Versorgung einer Maschinenanlage mit im Kreislauf über ein Filtersystem umgewälzter Flüssigkeit, wie Kühlschmiermittel, Suspensionen, Öl u.dgl., wobei die von der Maschinenanlage zurückgeführte, mit Spänematerial, wie vor allem Schleifspänen u.dgl., versetzte Schmutzflüssigkeit einem Schmutztank zur Pufferung zugeführt wird, aus dem sie mittels eines Filterpumpenaggregates abgezogen, durch das Filtersystem hindurchgeführt und als Filtrat wieder in den Kreislauf zurückgeführt wird, dadurch gekennzeichnet, daß als Filtersystem ein Druckfiltersystem mit mehreren Druckfiltern (2) verwendet wird, deren Filterelemente durch Umwälzen der im Schmutztank (9) befindlichen Schmutzflüssigkeit über eine Umwälzleitung (25) mit dem Spänematerial vorbelegt werden, bevor sie auf die zu der Maschinenanlage führende Filtratleitung (6) umgeschaltet werden, wobei das Filterpumpenaggregat (14) zugleich als Maschinenpumpenaggregat verwendet wird.

2. Verfahren nach Anspruch 1, dadurch gekennzeichnet, daß die dem Schmutztank (9) entnommene Schmutzflüssigkeit über mindestens zwei, vorzugsweise drei oder vier Druckfilter (2) des Druckfiltersystems abgereinigt wird, wobei im Betrieb der Maschinenanlage mindestens einer der Druckfilter (2) Filtrat der Maschinenanlage zuführt, wenn sich mindestens ein weiterer Druckfilter (2) in der Regenerationsphase befindet.

3. Verfahren nach Anspruch 1 oder 2, dadurch gekennzeichnet, daß das Filtrat über einen in der Filtratleitung (6) angeordneten Kühler (7) gekühlt wird.

4. Verfahren nach einem der Ansprüche 1 bis 3, dadurch gekennzeichnet, daß für das Druckfiltersystem Kerzendruckfilter mit Filterkuchentrocknung durch Druckgaseinleitung verwendet werden.

5. Einrichtung zur Filtration von im Kreislauf zwischen einer Maschinenanlage od.dgl. und einem Filtersystem umgewälzter Flüssigkeit, wie Kühlschmiermittel, Suspension, Öl u.dgl., mit einem die mit Spänematerial, wie vor allem mit Schleifspänen, versetzte rücklaufende Schmutzflüssigkeit aufnehmenden und puffernden Schmutztank, mit einem die Schmutzflüssigkeit aus dem Schmutztank abziehenden und durch das Filtersystem hindurchführenden Filterpumpenaggregat, und mit Zuführung des Filtrats zu der Maschinenanlage über eine Filtratleitung, dadurch gekennzeichnet, daß das Filtersystem (1) mindestens zwei Druckfilter (2) aufweist, die mit ihrem Filtereinlaß über das Filterpumpenaggregat (14) an den gemeinsamen Schmutztank (9) sowie mit ihrem Filterauslaß einerseits über eine absperrbare Umwälzleitung (25) an den Schmutztank (9) und andererseits an eine zu der Maschinenanlage führende, ebenfalls absperrbare Filtratleitung (6) angeschlossen sind.

6. Einrichtung nach Anspruch 5, dadurch gekennzeichnet, daß die Druckfilter (2) des Filtersystems (1) aus Kerzendruckfiltern mit Filterkuchentrocknung durch Einleiten eines Druckgases bestehen.

7. Einrichtung nach Anspruch 5 oder 6, dadurch gekennzeichnet, daß die mit ihren Filtereinlässen an das gemeinsame Filterpumpenaggregat (14) angeschlossenen Druckfilter (2) über in ihren Pumpenanschlußleitungen (19) angeordnete Absperrventile (20) einzeln oder gemeinsam absperrbar sind.

8. Einrichtung nach einem der Ansprüche 5 bis 7, dadurch gekennzeichnet, daß die mit ihren Filterauslässen an die gemeinsame Filtratleitung (6) und an die gemeinsame Umwälzleitung (25) angeschlossenen Druckfilter (2) jeweils unabhängig voneinander über Absperrventile (5, 26) auf die Filtratleitung (6) oder die Umwälzleitung (25) schaltbar sind.

9. Einrichtung nach einem der Ansprüche 5 bis 8, dadurch gekennzeichnet, daß die Druckfilter (2) auf ihrer Filterauslaßseite an eine gemeinsame, zu dem Schmutztank (9) führende Absteuerleitung (6') angeschlossen sind, wobei in der Verbindung der Absteuerleitung (6') zu dem Schmutztank (9) ein Absperrventil (27) angeordnet ist.

10. Einrichtung nach einem der Ansprüche 5 bis 9, dadurch gekennzeichnet, daß das Filterpumpenaggregat (14) in Parallelanordnung mehrere Pumpen (15) aufweist, die saugseitig jeweils über ein Absperrventil (16) an die zum Schmutztank (9) führende gemeinsame Saugleitung (17) und druckseitig über Absperrventile (18, 20) an die zu den Druckfiltern (2) führenden Pumpendruckleitungen (19) des Filterpumpenaggregats (14) angeschlossen sind.

11. Einrichtung nach einem der Ansprüche 5 bis 10, dadurch gekennzeichnet, daß das Filtersystem (1) drei oder vier Druckfilter (2) umfaßt.

12. Einrichtung nach einem der Ansprüche 5 bis 11, dadurch gekennzeichnet, daß die Druckfilter (2) eingangsseitig über Absperrventile (24) an eine zu dem Schmutztank (9) führende Entleerungsleitung (23) angeschlossen sind.
